Europäisches Patentamt

European Patent Office

Office européen des brevets

(19)

(11) Veröffentlichungsnummer : **0 342 378 B1**

(12)    # EUROPÄISCHE PATENTSCHRIFT

(45) Veröffentlichungstag der Patentschrift :
11.12.91 Patentblatt 91/50

(51) Int. Cl.$^5$ : **B60R 11/02**

(21) Anmeldenummer : **89107122.7**

(22) Anmeldetag : **20.04.89**

(54) Diebstahlsicherung eines versenkt anzuordnenden Einbaugerätes.

(30) Priorität : **18.05.88 DE 3816863**

(43) Veröffentlichungstag der Anmeldung :
**23.11.89 Patentblatt 89/47**

(45) Bekanntmachung des Hinweises auf die
Patenterteilung :
**11.12.91 Patentblatt 91/50**

(84) Benannte Vertragsstaaten :
**ES FR GB IT NL**

(56) Entgegenhaltungen :
**EP-A- 0 249 071
DE-A- 3 529 136
DE-A- 3 545 233
DE-A- 3 618 681
DE-U- 8 803 646
US-A- 4 211 995**

(73) Patentinhaber : **DAIMLER-BENZ
AKTIENGESELLSCHAFT
Mercedesstrasse 136
W-7000 Stuttgart 60 (DE)**

(72) Erfinder : **Weikert, Günther
Kalkofenweg 23/9
W-7252 Weil der Stadt (DE)**
Erfinder : **Holzhauer, Horst
Nagoldstrasse 29
W-7531 Schellbronn (DE)**
Erfinder : **Kneib, Rudi
Auf der Stelle 25
W-7032 Sindelfingen (DE)**
Erfinder : **Guckel, Martin
Schlossfeld 2
W-7256 Mönsheim (DE)**
Erfinder : **Robitschko, Peter
Kleines Egart 7
W-7032 Sindelfingen (DE)**

## Beschreibung

Die Erfindung bezieht sich auf eine Diebstahlsicherung eines versenkt anzuordnenden Einbaugerätes mit den Merkmalen des Oberbegriffs des Patentanspruchs 1.

Eine Diebstahlsicherung mit diesen Merkmalen ist bekannt (DE-A-3443650). Ist hierbei erst einmal das Einbaugerät mittels geeigneter, seine Halterungsmittel ausrückender Werkzeuge gelöst, so können Unbefugte es ungeachtet des ausgelösten Alarms mangels weiterer Sicherung relativ problemlos entwenden. Ausgehend von dieser vorstehenden Kritik wurde vorgeschlagen (DE-A-3545233), schon beim Abnehmen von Rahmenteilen eines Einbaugerätes den Alarm auszulösen, wenn z.B. ein Unbefugter versucht, an die unter den abdeckenden Rahmenteilen verborgenen mechanischen Halterungsmittel heranzukommen, um diese zu lösen. Ferner ist es bekannt, bereits beim unbefugten Öffnen oder Entfernen einer zu dessen Tarnung vor ein Einbaugerät fahrbaren Blende oder Abdeckung Alarm auszulösen (DE-A-3528016, DE-A-3537371).

Bei diesen letztgenannten Diebstahlsicherungen wurde also die zur Alarmauslösung zwangsläufig — zwecks Schalterbetätigung oder schleifenunterbrechung — erforderliche Relativbewegung zweier Teile im Gegensatz zu der gattungsbildenden Anordnung vom Einbaugerät selbst als bewegtem Teil weg auf andere bewegliche (Anbau-)Teile hin verlagert. Diese Maßnahme behebt zwar einerseits den mit der obengenannten Kritik vorgebrachten Nachteil, läßt aber andererseits auch den Schutz für das Einbaugerät nur bis zum Entfernen der Abdeckung bzw. Blende wirken. Ist der damit ausgelöste Alarm gelöscht — entsprechend den gesetzlichen Vorschriften nach 30 Sekunden—, so ist das Einbaugerät nur noch durch die jeweiligen mechanischen Halterungsmittel gesichert. Diese sind aber im allgemeinen ebenfalls von der Frontseite des Einbaugerätes her zugänglich und mit geeigneten einfachen Werkzeugen lösbar.

Eine weitere, rein mechanische Diebstahlsicherung für Einbaugeräte der in Rede stehenden Art ist bekannt (DE-A-3618681), bei welcher das Einbaugerät durch ein an seiner Rückseite befestigtes, spannbares Zugelement in seinem Einbauschacht festgelegt wird. Das gepanzerte Zugelement ist nur mit größtem Aufwand Unbefugten zugänglich. Andererseits sind im Vergleich zu den üblichen Einbausätzen auch vor eventuellen Reparaturen am Einbaugerät umfangreiche Ausbauarbeiten notwendig, da unter anderem jedesmal ein Teil einer das Zugelement sichernden Schraube ausgebohrt werden muß.

Speziell für den werksseitigen (Serien-)Einbau der letztgenannten Diebstahlsicherung wird eine Führung und Panzerung des Zugelementes durch ein Rohr vorgeschlagen.

Aufgabe der Erfindung sit die Verbesserung einer gattungsgemäßen Diebstahlsicherung — bei welcher durch eine Relativbewegung zwischen dem Einbaugerät bzw. dessen Halterungsmitteln und dem Einbauschacht Alarm auslösbar ist—,
unter Gewährung eines für befugte Personen einfachen Ein- und Ausbaus des Einbaugerätes von der Einschuböffnung des Einbauschachts her.

Diese Aufgabe wird mit den kennzeichnenden Merkmalen der unabhängigen Ansprüche 1 und 2 erfindungsgemäß gelöst.

Denn weil das Einbaugerät in seinem Einbauschacht— in Anlehnung an sogenannte "Quick-out"-Einbausätze — immer, d.h. auch im gesicherten Zustand, innerhalb einer begrenzten Strecke bewegbar ist, wobei ein ebenfalls bewegbarer Sicherungsanschlag die sichernde Begrenzung dieser Strecke gewährleistet, wird
— eine Verlegung der Halterungsmittel in den bei gesichertem Einbaugerät unzugänglichen Einbauschacht ermöglicht,
— aufgrund der bedingten Bewegbarkeit des Sicherungsanschlags durch Befugte einfaches Ein- und Ausbauen des Einbaugerätes ermöglicht.

Dabei stellen die benötigten Kabelanschlüsse kein Problem dar, denn diese müssen ja ohnehin lang genug sein, um ein vollständiges Herausziehen des Einbaugerätes aus dem Einbauschacht zuzulassen bzw. die vollständige Verkabelung vor dem Einschieben des Einbaugerätes zu erlauben.

Die gängigen Schiebeführungen im Einbauschacht bzw. am Einbaugerät können unverändert beibehalten werden. Benötigt werden lediglich ein oder mehrere Angriffspunkte am Einbaugerät für eine dieses in seine Einbaulage spannende Rückstellkraft. Diese wird vor allem dann sinnvollerweise vorgesehen, wenn auf die üblichen Halterungs-Rastnasen etc. verzichtet werden soll, um das Einbaugerät in seiner Einbaulage auch bei Fahrbahnunebenheiten und Fahrzeugbeschleunigungen zu sichern. Nach der Lehre des Nebenanspruchs, welche keine Rückstellkraft vorsieht — diese ist zur Lösung der Aufgabe auch nicht zwingend erforderlich — sollten die üblichen Halterungs-Rastnasen jedoch zusätzlich zu dem bewegbaren Sicherungsanschlag vorgesehen sein. Allerdings übernimmt immer der Sicherungsanschlag allein die eigentliche mechanische Diebstahlsicherung. Ein Fortfall der üblichen Halterungs-Rastnasen seitlich am Einbaugerät hat aber den Vorteil, daß keine Öffnung an der Frontseite des Einbaugerätes — und keine diese etwa verdeckenden Blenden — mehr vorgesehen zu werden brauchen. Die Unteransprüche offenbaren mit ihren kennzeichnenden Merkmalen vorteilhafte Weiterbildungen der erfindungsgemäßen Diebstahlsicherung.

Die durch das Verbringen des Sicherungsanschlages in seine Sicherungsstellung erreichbare Diebstahlsicherheit für das Einbaugerät ist, unabhängig von seinem Eingriffsort an einem Zugelement oder am Gehäuse des Einbaugeräts selbst, sehr groß, da wiederum keine Möglichkeit für Unbefugte besteht, etwa von der Einbaugerät-Frontseite daran anzugreifen.

Zweckmäßig wird die bedingte Beweglichkeit des Sicherungsanschlags an eine Schlüsselverwendung geknüpft, wobei eine mechanische oder eine ferngesteuerte fremdkraftbetätigte Bewegung möglich ist.

Im Zusammenhang mit der Sicherung von fernentriegelbaren Motorhauben von Kraftfahrzeugen sind direkt mechanisch wirkende (DE-A-2314957) bzw. fremdkraftbetätigte fernsteuerbare Zugelementsicherungen (DE-A-2116448) an sich bereits bekannt, welche die unbefugte Verschiebung des Motorhauben-Fernentriegelungsseilzuges verhindern können. Ein Hinweis auf eine Diebstahlsicherung eines Einbaugerätes kann den genannten Druckschriften nicht entnommen werden.

Ausführungsbeispiele der erfindungsgemäßen Diebstahlsicherung sind in der Zeichnung schematisch dargestellt und werden im folgenden näher beschrieben.

Es zeigen :

Figur 1    eine Gesamtansicht eines Einbaugerätes mit zwei Varianten der Diebstahlsicherung ;

Figur 2    ein Zugelement als mechanisches Halterungsmittel, welches mit einem Sicherungsanschlag blockierbar ist, sowie einen zugeordneten elektrischen Diebstahlsicherungskontakt in drei Stellungsvarianten 2a, 2b und 2c.

Ein Einbaugerät 1, z.B. eine Radio-/ Cassettenlaufwerk-Kombination, ist in einem aufgeschnittenen Einbauschacht 2 eines Kraftfahrzeug-Armaturenbretts 3 in seiner Einbaulage dargestellt. Das Einbaugerät 1 ist nur von seiner in den Fahrgastraum weisenden Frontseite 4 her frei zugänglich. An seiner Rückseite 5 ist eine Einschubführung 6 angeordnet, die als Angriffspunkt einer das Einbaugerät 1 in den Einbauschacht 3 hinein und in seine Einbaulage ziehenden Rückstellkraft vorgesehen ist. Diese Rückstellkraft wird durch ein als Seil 7 ausgebildetes Zugelement auf die Einbaugerät-Rückseite 5 übertragen. Das Seil 7 ist über den größten Teil seiner Länge in einem karosseriefesten Rohr 8 geführt. Die erwähnte Rückstellkraft wird durch eine Schraubendruckfeder 9 in das Seil 7 eingeleitet, welche sich

— über einen Endnippel 10 an dem Seil 7

— und über eine Einschnürung 11 an dem Rohr 8 jeweils über eine Scheibe 12 abstützt.

Die Feder 9 und das Seil 7 sind so lang, daß das Einbaugerät 1 mitsamt seinen elektrischen Anschlüssen 13 und Antennenkabel 14 — die sich wie üblich ebenfalls auf der Rückseite 5 befinden — ganz aus dem Einbauschacht 2 ohne Abbau des fest über die Einschubführung 6 mit dem Einbaugerät 1 verbundenen haltenden Seils 7 herausgezogen werden kann, bevor die Feder auf ihre Blocklänge verkürzt ist.

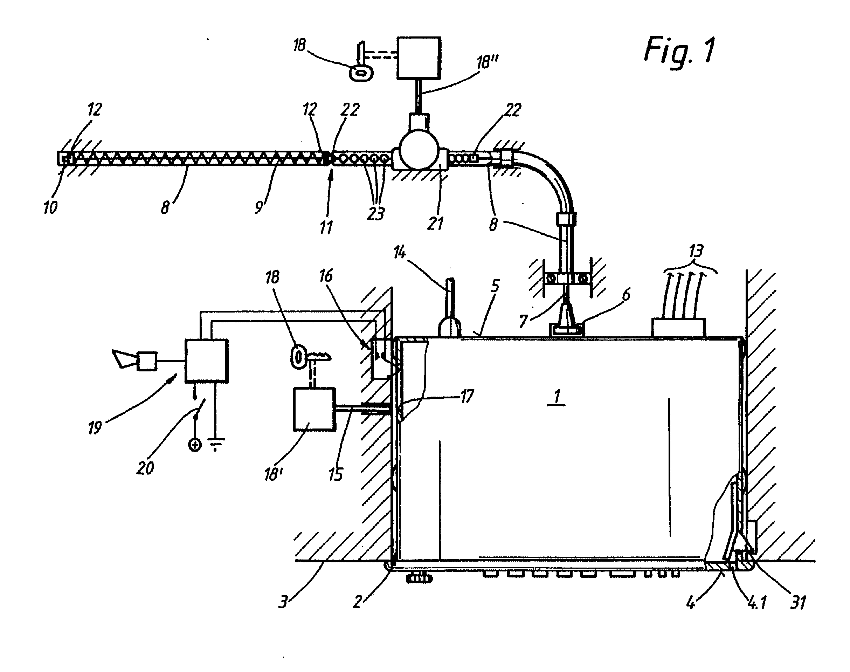

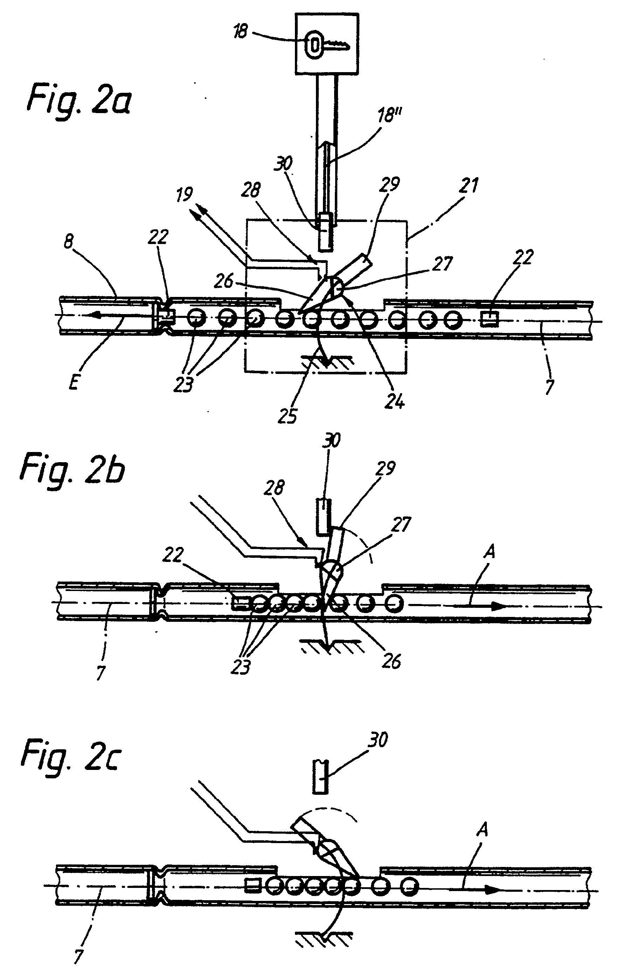

Die Diebstahlsicherung im engeren Sinne ist in zwei Varianten dargestellt, deren erste in einem am Rohr 8 befestigten Gehäuse 21 im Einbauschacht untergebracht ist — diese Variante wird in Figur 2a)-2c) noch genauer dargestellt — und am Seil 7 in Wirkung tritt, deren zweite, wie aus Figur 1 ersichtlich, am Einbaugerät 1 selbst in Wirkung tritt. Diese zweite Variante der Diebstahlsicherung weist einen mechanischen Sicherungsanschlag 15 und eine elektrischen Diebstahlsicherungskontakt 16 auf. Diese sind beide im Einbauschacht 2 angeordnet und korrespondieren beide mit einem Langloch 17 im Einbaugerät 1. Der Sicherungsanschlag 15 ist bedingt beweglich, was durch ein Schlüsselsymbol 18 angedeutet wird. Dieses steht für eine mechanische Beweglichkeit des Sicherungsanschlags 15 mittels eines Schließzylinders — z.B. den des Lenkschlosses — oder auch für eine fremdkraftbetätigte Beweglichkeit mittels eines Stellelementes 18', das wiederum durch einen schlüsselbetätigten Schalter — z.B. den Zündschalter oder einen Zentralverriegelungssteuerschalter — fernsteuerbar ist. Derartige Anordnungen sind für sich hinreichend bekannt und brauchen daher nicht näher beschrieben zu werden. Der in seiner Freigabestellung dargestellte Sicherungsanschlag 15 kann also mittels Schlüssels in seine Sicherungsstellung verbracht werden, in welcher er in das Langloch 17 eingreift.

Die erfindungsgemäße Diebstahlsicherung wirkt nun dahin, daß sich das Einbaugerät 1 zwar auch bei in Sicherungsstellung befindlichem Sicherungsanschlag 15 ein wenig aus dem Einbauschacht 2 herausziehen läßt — gegen die Rückstellkraft der Feder 9 und höchstens über die Länge des Langlochs 17 —, daß aber während dieser Bewegung der Diebstahlsicherungskontakt 16 betätigt — hier : geschlossen — wird und über eine Alarmanlage 19 Alarm auslöst. Die Alarmanlage 19 wird gleichzeitig mit dem Verbringen des Sicherungsanschlags 15 in seine Sicherungsstellung scharfgeschaltet, indem ein Plus-Schalter 20 geschlossen wird. Die Vorteile dieser Anordnung wurden bereits einleitend geschildet. Nur auf der rechten Seite des Einbaugerätes 1 ist schematisch eine Rastnasen-Halterungsbauart 31 gezeigt, die in ähnlicher Weise oft beidseitig verwendet wird und durch eine Öffnung 4.1 hindurch mittels eines Werkzeugs bewegbar und ausrückbar ist.

Wird eine solche Halterung weiterhin verwendet, so können bei Einbau der beschriebenen zweiten Variante der Diebstahlsicherung die Rückstellkraft und/oder das Halteseil weggelassen werden. Nach unbefugtem Ausrücken der Rastnase(n) kann auch hier das Einbaugerät nur bis zum Anlaufen des Langlochendes am Sicherungsanschlag herausgezogen werden. Unterwegs wird dann aber schon Alarm ausgelöst.

Dieselbe Wirkung wie vorab geschildert wird auch mit der einleitend erwähnten ersten Variante der Diebstahlsicherung erzielt, der ebenfalls schematisch ein Schlüsselsymbol 18 zugeordnet ist, um dieselben Betätigungsmöglichkeiten wie bei der vorab beschriebenen zweiten Variante anzudeuten. Speziell ist hier ein Bowdenzug 18″ mit dem Sicherungsanschlag 30 zu dessen Hin- und Her-Bewegung verbunden ; mit dem angedeuteten Schlüssel 18 wird dann ein Schließzylinder betätigt, an welchen der Bodenzug 18″ angekuppelt ist. Der Sicherungsanschlag 30 kann auch federnd in seine Sicherungsstellung vorgespannt sein. Das Gehäuse 21 ist in einem Bereich des Rohres 8 angebracht, in welchem sich in der gezeigten Einbaulage des Einbaugerätes 1 ein durch zwei fest mit dem Seil 7 verbundene Nippel 22 begrenzter Seilabschnitt befindet. Auf letzterem sind Körper 23 — in Gestalt von Kugeln — mit geringem axialem Spiel lose aufgereiht. Die Nippel 22 und Körper 23 werden bei Bewegungen des Seils 7 innerhalb des Rohres 8 und des Gehäuses 21 mitgeführt.

Der Inhalt des Gehäuses 21 ist in Figur 2a) bis 2c) dargestellt, wobei das Gehäuse 21 selbst nur noch in 2a) gestrichelt angedeutet und in 2b) und 2c) fortgelassen ist. Das Seil 7 ist nur noch als Mittellinie dargestellt. In dem Gehäuse 21 ist eine federnde Klinke 24 gegen die Kraft einer Blattfeder 25 schwenkbar gelagert. Die Klinke 24 weist eine Gabelspitze 26 auf, die unter der Kraft der Blattfeder 25 zwischen je zwei der Körper 23 beidseitig des Seils 7 einfällt. Auf der Schwenkachse der Klinke 24 ist ferner ein Exzenter 27 angeordnet, der mit einem elektrischen Diebstahlsicherungskontakt 28 in Wirkverbindung steht. Schließlich weist die Klinke 24 noch einen Sicherungsarm 29 auf, der mit einem Sicherungsanschlag 30 in Wechselwirkung steht.

Funktionell sind der Sicherungsanschlag 30 der ersten Variante und der Sicherungsanschlag 15 der zweiten Variante äquivalent, ebenso die Diebstahlsicherungskontakte 28 (1. Variante) und 16 (2. Variante).

In Figur 2a) ist ferner ein Pfeil E eingetragen, der die Bewegungsrichtung des Seils 7, der Nippel 22 und der Körper 23 beim Einbau bzw. Loslassen des Einbaugerätes anzeigt. Hierbei wird weder der Diebstahlsicherungskontakt 28 geschlossen noch läuft der Sicherungsarm 29 der Klinke 24 am Sicherungsanschlag 30 an.

In Figur 2b) ist ein Pfeil A eingetragen, der eine Umkehr der Bewegungsrichtung von E, also (unbefugten) Ausbau des Einbaugerätes, anzeigt. Die Klinke 24 wird dann durch die gestauten Körper 23 über ihre Spitze 26 mit ihrem Sicherungsarm 29 gegen den Sicherungsanschlag 30 geschwenkt. Ein weiteres Herausziehen des Einbaugerätes 1 wird dann mechanisch verhindert. Bereits vorher wird durch den Exzenter 27 der elektrische Diebstahlsicherungskontakt 28 alarmauslösend geschlossen.

In 2a) und 2b) befindet sich der Sicherungsanschlag 30 in Sicherungsstellung.

In Figur 2c) befindet sich der Sicherungsanschlag 30 in Freigabestellung. Dahin kann er, wie bereits erwähnt, nur mittels Schlüssels verbracht werden, wobei gleichzeitig die Alarmanlage ausgeschaltet wird. Dann läßt sich, wie gezeigt, das Einbaugerät gegen die Kraft der Feder 9 mitsamt dem Seil 7, den Nippeln 22 und den Körpern 23 herausziehen. Zwar wird auch hierbei der Diebstahlsicherungskontakt 28 mechanisch betätigt, eine Alarmauslösung erfolgt jedoch nicht. Genau analog funktioniert auch die erste Variante der Diebstahlsicherung ; bei der in Figur 1 gezeigten Stellung des Sicherungsanschlags 15 und des Schalters 20 läßt sich das Einbaugerät 1 relativ leicht aus dem Einbauschacht entfernen. Die Einschubführung 6 ermöglicht nach Ausbau des Einbaugeräts 1 ein einfaches Lösen des Seils 7 von der Rückseite 5.

Aus der vorstehenden Beschreibung der Diebstahlsicherung geht klar hervor, daß beide Varianten für sich vollständig sind und unabhängig voneinander verwendet werden können. Es sind aber auch Mischformen oder gleichzeitiger Einsatz beider Varianten denkbar. Eine Einschränkung des Schutzumfangs darf in den Ausführungsbeispielen nicht gesehen werden.

Selbstverständlich läßt sich die beschriebene und beanspruchte Diebstahlsicherung auch in kraftfahrzeugfremden Verwendungen vorteilhaft nutzen, z.B. für Geräte von Heim-Stereoanlagen ; diesem Umstand ist durch nur "Insbesondere-" Beanspruchung in Haupt- und Nebenanspruch Rechnung getragen.

## Patentansprüche

1. Diebstahlsicherung eines versenkt in einem Einbauschacht (2) anzuordnenden Einbaugerätes (1), insbesondere eines Phono- oder Videogerätes in einem Kraftfahrzeug,
welches in dem Einbauschacht (2) führbar und sicherbar ist und in seiner Einbaulage nur von seiner Frontseite (4) her zugänglich ist,
wobei unbefugter Ausbau des Einbaugerätes (1) zum einen durch bedingt bewegbare mechanische Sicherungsmittel mindestens erschwert wird und zum anderen durch eine aus einer Betätigung mindestens eines elektrischen Diebstahlsicherungskontakts (16, 28) im Ablauf einer Relativbewegung zwischen dem Einbaugerät bzw. mit diesem fest verbundenen Halterungsmitteln (7, 9) einerseits und dem Einbauschacht andererseits resultierende, spätestens beim Überwinden der mechanischen Sicherung des Einbaugerätes erfolgende Alarmauslösung nach außen hin gemeldet wird, **dadurch gekennzeichnet,**
daß das Einbaugerät (1) in dem Einbauschacht (2) aus seiner Einbaulage heraus wenigstens innerhalb einer begrenzten Strecke gegen eine an ihm angreifende, in Richtung auf seine Einbaulage wirkende, von mindestens einem federnden Halterungsmittel (7, 9) erzeugte Rückstellkraft geführt bewegbar angeordnet ist,
daß ein unabhängig vom Einbaugerät (1) bedingt bewegbarer mechanischer Sicherungsanschlag (15, 30) zur wenigstens mittelbaren — das Einbaugerät (1) sichernden — Begrenzung der genannten Strecke im Einbauschacht (2) vorgesehen ist und daß der mindestens eine Diebstahlsicherungskontakt (16, 28) bei einer Bewegung des Einbaugerätes (1) innerhalb der durch den Sicherungsanschlag (15, 30) begrenzten Strecke wenigstens mittelbar alarmauslösend betätigbar ist.

2. Diebstahlsicherung eines versenkt in einem Einbauschacht (2) anzuordnenden Einbaugerätes (1), insbesondere eines Phono- oder Videogerätes in einem Kraftfahrzeug,
welches in dem Einbauschacht (2) führbar und sicherbar ist und in seiner Einbaulage nur von seiner Frontseite (4) her zugänglich ist,
wobei unbefugter Ausbau des Einbaugerätes (1) zum einen durch bedingt bewegbare mechanische Sicherungsmittel mindestens erschwert wird und zum anderen durch eine aus einer Betätigung mindestens eines elektrischen Diebstahlsicherungskontakts (16, 28) im Ablauf einer Relativbewegung zwischen dem Einbaugerät bzw. mit diesem fest verbundenen Halterungsmitteln (7, 9) einerseits und dem Einbauschacht andererseits resultierende, spätestens beim Überwinden der mechanischen Sicherung des Einbaugerätes erfolgende Alarmauslösung nach außen hin gemeldet wird, **dadurch gekennzeichnet,**
daß das Einbaugerät (1) in dem Einbauschacht (2) aus seiner Einbaulage heraus nach Lösen von Halterungsmitteln (31) wenigstens innerhalb einer begrenzten Strecke geführt bewegbar angeordnet ist,
daß ein unabhängig vom Einbaugerät (1) bedingt bewegbarer mechanischer Sicherungsanschlag (15, 30) zur wenigstensmittelbaren — das Einbaugerät (1) sichernden — Begrenzung der genannten Strecke im Einbauschacht (2) vorgesehen ist und daß der mindestens eine Diebstahlsicherungskontakt (16, 28) bei einer Bewegung des Einbaugerätes (1) innerhalb der durch den Sicherungsanschlag (15, 30) begrenzten Strecke wenigstens mittelbar alarmauslösend betätigbar ist.

3. Diebstahlsicherung nach Anspruch 1 oder 2, **dadurch gekennzeichnet,** daß der Sicherungsanschlag (15, 30) zwischen einer Sicherungsstellung und einer Freigabestellung bistabil hin und her bewegbar ist.

4. Diebstahlsicherung nach Anspruch 3, **dadurch gekennzeichnet,** daß der Sicherungsanschlag (15, 30) durch mechanische Mittel, insbesondere durch einen Bowdenzug (18″), bewegbar ist.

5. Diebstahlsicherung nach Anspruch 3, **dadurch gekennzeichnet,** daß der Bowdenzug (18″) mittels eines Schließzylinders (18), insbesondere mittels eines Lenkschloß-Schließzylinders, bewegbar ist.

6. Diebstahlsicherung nach Anspruch 3 oder 4, **dadurch gekennzeichnet,** daß der Sicherungsanschlag (15, 30) wenigstens mittelbar durch ein fremdkraftbetätigtes Stellelement (18′) bewegbar ist.

7. Diebstahlsicherung nach Anspruch 6, **dadurch gekennzeichnet,** daß das Stellelement (18′) mittels eines elektrischen Schalters, insbesondere eines Zünd-/Lenkschloßschalters (18) steuerbar ist.

8. Diebstahlsicherung nach Anspruch 1 oder 3, **dadurch gekennzeichnet,** daß ein durch die Rückstellkraft spannbares Zugelement (7) als Halterungsmittel fest mit der Rückseite (5, 6) des Einbaugerätes (1) verbunden ist.

9. Diebstahlsicherung nach Anspruch 8, **dadurch gekennzeichnet,** daß das spannbare Zugelement — in an sich bekannter Weise — als in einem Rohr (8) geführtes Seil (7) ausgebildet ist und daß die Rückstellkraft durch eine konzentrisch zu dem Seil (7) innerhalb des Rohres (8) angeordnete, sich einerseits an dem Seil (7, 10) andererseits an dem Rohr (8, 11) abstützende Schraubendruckfeder (9) erzeugt wird, welche so lang ist, daß ein vollständiges Herausziehen des mit dem Seil (7) verbundenen Einbaugerätes (1) aus dem Einbauschacht (2) vor der Verkürzung der Schraubendruckfeder (9) auf ihre Blocklänge möglich ist.

10. Diebstahlsicherung nach Anspruch 9, **dadurch gekennzeichnet,** daß dem Seil (7) mindestens ein Widerlager (24) für den in seiner Sicherungsstellung befindlichen Sicherungsanschlag (30) zugeordnet ist.

11. Diebstahlsicherung nach Anspruch 10, **dadurch gekennzeichnet,**
daß eingeschlossen zwischen zwei mit dem Seil (7) fest verbundenen Nippeln (22) eine Reihe von Körpern (23) lose auf das Seil (7) mit geringem axialem Spiel aufgereiht und mit dem Seil zusammen innerhalb des Rohres (8) verschiebbar angeordnet ist,
daß an dem Rohr (8) ein Gehäuse (21) in einem Bereich angeordnet ist, in welchem sich bei in Einbaulage befindlichem Einbaugerät (1) die durch die beiden Nippel (22) eingeschlossenen Körper (23) befinden,
und daß von dem Gehäuse (21) einerseits der Sicherungsanschlag (30) und andererseits eine das Widerlager für den Sicherungsanschlag (30) bildende, gegen Federkraft (25) im Gehäuse (21) schwenkbare Klinke (24) andererseits umschlossen sind,
wobei die federnde Klinke (24) bei in Einbaulage befindlichem Einbaugerät (1) zwischen zwei der Körper (23) eingreift und bei einer Bewegung des mit dem Seil (7) fest verbundenen Einbaugeräts (1) aus seiner Einbaulage heraus mindestens bis zu ihrem Anlaufen an den Sicherungsanschlag 30 verschwenkbar ist.

12. Diebstahlsicherung nach Anspruch 11, **dadurch gekennzeichnet**, daß der elektrische Diebstahlsicherungskontakt (28) als durch die Klinke (24, 27) innerhalb deren Schwenkweges bis zum Sicherungsanschlag (30) schaltbarer Schalter ausgebildet ist.

13. Diebstahlsicherung nach Anspruch 1 oder 2, **dadurch gekennzeichnet**, daß der in Nachbarschaft zum in Einbaulage befindlichen Einbaugerät (1) im Einbauschacht (2) angeordnete elektrische Diebstahlsicherungskontakt (16) unmittelbar durch das Einbaugerät (1, 17) selbst schaltbar ist.

14. Diebstahlsicherung nach Anspruch 1, 2, 3 oder 13, **dadurch gekennzeichnet**, daß der in Nachbarschaft zum in Einbaulage befindlichen Einbaugerät (1) im Einbauschacht (2) angeordnete mechanische Sicherungsanschlag (15) in eine die begrenzte Bewegung zulassende Aussparung (17) des Einbaugerätes (1) einfahrbar ist.

## Claims

1. An anti-theft device for an appliance (1), particularly a video or audio appliance in a motor vehicle, intended to be disposed flush in an installation cavity (2), and which can be guided and secured in the installation cavity (2), and which, when installed, is accessible only from its front (4), unauthorised removal of the installed appliance (1) being on the one hand at least impeded by mechanical locking means adapted for conditional movement and, on the other, such unauthorised removal is outwardly announced by the triggering of an alarm no later than upon the mechanical lock on the installed appliance being overcome, the said triggering resulting from actuation of at least one electrical anti-theft contact (16, 28) during the course of a relative movement between the installed appliance and retaining means (7, 9) rigidly connected thereto on the one hand and the installation cavity on the other, characterised in that the installed appliance (1) is disposed in the installation cavity (2) and is adapted for guided movement out of its installed position at least within a limited path against a restoring force engaging it and acting in the direction of its installed position and generated by at least one resilient retaining means (7, 9), and in that a mechanical locking abutment (15, 30) which is adapted for limited movement independently of the installed appliance (1) is provided for at least indirect restriction of the said path in the installation cavity (2), so locking the installed appliance (1), and in that the at least one anti-theft contact (16, 28) can be actuated at least indirectly to trigger an alarm in the event of the installed appliance (1) moving within the path limited by the locking abutment (15, 30).

2. An anti-theft device for an appliance (1), particularly a video or audio appliance in a motor vehicle, intended to be disposed flush in an installation cavity (2), and which can be guided and secured in the installation cavity (2), and which, when installed, is accessible only from its front (4), unauthorised removal of the installed appliance (1) being on the one hand at least impeded by mechanical locking means adapted for conditional movement and, on the other, such unauthorised removal is outwardly announced by the triggering of an alarm no later than upon the mechanical lock on the installed appliance being overcome, the said triggering resulting from actuation of at least one electrical anti-theft contact (16, 28) during the course of a relative movement between the installed appliance and retaining means (7, 9) rigidly connected thereto on the one hand and the installation cavity on the other, characterised in that the installed appliance (1) is disposed in the insulating cavity (2) and is adapted for guided movement out of its installed position and at least within a limited path once retaining means (31) have been released, and in that the at least one anti-theft contact (16, 28) can be actuated at least indirectly to trigger an alarm in the event of the installed appliance (1) moving within the path limited by the locking abutment (15, 30).

3. An anti-theft device according to Claim 1 or 2, characterised in that the locking abutment (15, 30) is reciprocatingly movable on a bistable principle between a locking position and a release position.

4. An anti-theft device according to Claim 3, characterised in that the locking abutment (15, 30) can be moved by mechanical means, particularly by a bowden control cable (18").

5. An anti-theft device according to Claim 3, characterised in that the bowden control cable (18") can be moved by means of a locking cylinder (18), particularly by means of a steering lock locking cylinder.

6. An anti-theft device according to Claim 3 or 4, characterised in that the locking abutment (15, 30) is adapted for movement at least directly by an outside force actuated positioning element (18').

7. An anti-theft device according to Claim 6, characterised in that the positioning element (18') can be controlled by means of an electrical switch, particularly an ignition/steering lock switch (18).

8. An anti-theft device according to Claim 1 or 3, characterised in that as a retaining means, a traction element (7) which can be tensioned by the restoring force is rigidly connected to the back (5, 6) of the installed appliance (1).

9. An anti-theft device according to Claim 8, characterised in that the tensionable traction element is in per se known manner constructed as a cable (7) guided within a tube (8) and in that the restoring force is generated by a coiled thrust spring (9) disposed inside the tube (8) concentrically with the cable (7) and biased at one end on the cable (7, 10) and at the other on the tube (8, 11), the coiled thrust spring (9) being so long that complete withdrawal of the installed appliance (1) which is connected to the cable (7) from the installation cavity (2) is possible prior to the coiled thrust spring (9) being shortened to its block length.

10. An anti-theft device according to Claim 9, characterised in that associated with the cable (7) is at least one abutment (24) for the locking abutment (30) which is in its locking position.

11. An anti-theft device according to Claim 10, characterised in that a series of bodies (23) are arranged loosely and with minimal axial clearance on the cable (7) between two nipples (22) which are rigidly connected to the cable (7) and in that they are displaceable inside the tube (8) together with the cable and in that there is disposed on the tube (8) a housing (21) in a region in which, when the installed appliance (1) is in the installed position, there are the bodies (23) which are enclosed by the two nipples (22) and in that the housing (21) encloses on the one hand the locking abutment (30) and on the other a detent (24) which is pivotable in the housing (21) against spring force (25) and which represents the thrust bearing for the locking abutment (30), the spring-loaded detent (24), when the installed appliance is in the installed position, engaging between two of the bodies (23) and being adapted to be pivoted at least until it encounters the locking abutment (30) when the installed appliance (1) which is rigidly connected to the cable (7) is moved out of its installed position.

12. An anti-theft device according to Claim 11, characterised in that the electrical anti-theft contact (28) is constructed as a switch which can be switched by the detent (24, 27) within its pivoting movement as far as the locking abutment (30).

13. An anti-theft device according to Claim 1 or 2, characterised in that the electrical anti-theft contact (16) which is disposed in the vicinity of the installed appliance (1) when this is in its installed position in the installation cavity (2) can be actuated directly by the installed appliance (1, 17) itself.

14. An anti-theft device according to Claim 1, 2, 3 or 13, characterised in that the mechanical locking abutment (15) which is disposed in the installation cavity (2) in the vicinity of the installed appliance (1) when this is in the installed position can be moved into a recess (17) in the installed appliance (1) which permits of limited movement.

## Revendications

1. Dispositif de protection anti-vol pour un appareil (1) rapporté destiné à être monté encastré dans un alvéole de montage (2),

en particulier, pour un appareil phonographique ou vidéo monté dans un véhicule automobile,

qui peut être guidé et verrouillé dans l'alvéole de montage (2) et qui, dans sa position de montage, n'est accessible que par sa face avant (4),

dans lequel l'enlèvement non autorisé de l'appareil rapporté (1), d'une part, est rendu au moins plus difficile par des moyens de sécurité mécaniques mobiles sur une distance limitée et, d'autre part, est signalé à l'extérieur par le déclenchement d'une alarme qui résulte de l'actionnement d'au moins un contact électrique de protection anti-vol (16, 28) produit au cours d'un déplacement relatif entre l'appareil rapporté, ou de moyens de retenue (7, 9) fixés rigidement à cet appareil, d'une part, et l'alvéole de montage, d'autre part, déclenchement qui se produit au plus tard lorsque la sécurité mécanique de l'appareil rapporté est surmontée,

caractérisé en ce que l'appareil rapporté est agencé mobile et guidé dans l'alvéole de montage (2) pour pouvoir s'éloigner de sa position de montage, au moins sur une distance limitée, à l'encontre d'une force de rappel agissant sur cet appareil, qui est dirigée vers sa position de montage, et qui est produite par au moins un moyen de retenue élastique (7, 9),

en ce qu'une butée de sécurité mécanique (15, 30) mobile sur une distance limitée, indépendamment de l'appareil rapporté (1) est prévue dans l'alvéole de montage (2) pour assurer une limitation au moins indirecte — qui protège l'appareil encastré (1), de la course précitée, et en ce que ledit contact de protection anti-vol (16, 28), prévu à au moins un exemplaire, peut être actionné, au moins indirectement, pour le déclenchement de l'alarme, en réponse à un déplacement de l'appareil rapporté (1) dans les limites de la course limitée par la butée de sécurité (15, 30).

2. Dispositif de protection anti-vol pour un appareil (1) rapporté destiné à être monté encastré dans un alvéole de montage (2),

en particulier, pour un appareil phonographique ou vidéo monté dans un véhicule automobile, qui peut être guidé et verrouillé dans l'alvéole de montage (2) et qui, dans sa position de montage, n'est accessible que par sa face avant (4),

dans lequel l'enlèvement non autorisé de l'appareil rapporté (1), d'une part, est rendu au moins plus difficile par des moyens de sécurité mécaniques mobiles sur une distance limitée et, d'autre part, est signalé à l'extérieur par le déclenchement d'une alarme qui résulte de l'actionnement d'au moins un contact électrique de protection anti-vol (16, 28) produit au cours d'un déplacement relatif entre l'appareil rapporté, ou de moyens de retenue (7, 9) fixés rigidement à cet appareil, d'une part, et l'alvéole de montage, d'autre part, déclenchement qui se produit au plus tard lorsque la sécurité mécanique de l'appareil rapporté est surmontée, caractérisé en ce que l'appareil rapporté (1) est agencé dans l'alvéole de montage (2) de manière à pouvoir s'éloigner de sa position de montage en mouvement guidé, au moins d'une course limitée après le dégagement de moyens de retenue (31),

en ce qu'une butée de sécurité mécanique (15, 30) mobile sur une distance limitée indépendamment de l'appareil rapporte (1), est prévue dans l'alvéole de montage (2) pour assurer la limitation au moins indirecte — qui protège l'appareil rapporté (1) — de la course précitée et en ce que ledit contact de protection anti-vol (16, 28), prévu à au moins un exemplaire, peut être actionné, au moins indirectement, pour le déclenchement de l'alarme, en réponse à un déplacement de l'appareil rapporté (1) dans les limites de la course limitée par la butée de sécurité (15, 30).

3. Dispositif de protection anti-vol selon la revendication 1 ou 2, caractérisé en ce que la butée de sécurité (15, 30) peut être déplacée de façon bistable entre une position de sécurité et une position de libération.

4. Dispositif de protection anti-vol selon la revendication 3, caractérisé en ce que la butée de sécurité (15, 30) peut être déplacée par des moyens mécaniques, notamment par un câble Bowden (18″).

5. Dispositif de protection anti-vol selon la revendication 3, caractérisé en ce que le câble Bowden (18″) peut être mis en mouvement au moyen d'un barillet de serrure (18), en particulier au moyen d'un barillet de serrure servant à bloquer la direction.

6. Dispositif de protection anti-vol selon la revendication 3 ou 4, caractérisé en ce que la butée de sécurité (15, 30) peut être déplacée, au moins indirectement, par un élément actionneur (18') actionné par une force étrangère.

7. Dispositif de protection anti-vol selon la revendication 6, caractérisé en ce que l'élément actionneur (18') peut être commandé à l'aide d'un interrupteur électrique, notamment d'un interrupteur de contact/blocage de direction (18).

8. Dispositif de protection anti-vol selon la revendication 1 ou 3, caractérisé en ce qu'un élément de traction (7) qui peut être tendu par la force de rappel est relié rigidement à la face arrière (5, 6) de l'appareil rapporté (1), pour servir de moyens de retenue.

9. Dispositif de protection anti-vol selon la revendication 8, caractérisé en ce que l'élément de traction pouvant être tendu est constitué — d'une façon connue en soi — par un câble (7) guidé dans un tube (8),

et en ce que la force de rappel est produite par un ressort de compression hélicoïdal (9) disposé concentriquement au câble (7) à l'intérieur du tube, et qui s'appuie, d'un côté, contre le câble (7, 10) et de l'autre côté, contre le tube (8, 11), et qui est suffisamment long pour permettre d'extraire totalement l'appareil rapporté (1), fixé au câble (7), de l'alvéole de montage (2) avant que le ressort de compression hélicoïdal (9) n'ait été raccourci à sa longueur de blocage spire contre spire.

10. Dispositif de protection anti-vol selon la revendication 9, caractérisé en ce qu'au moins une butée (24) coopérant avec la butée de sécurité (30) placée dans sa position de sécurité est associée au câble (7).

11. Dispositif de protection anti-vol selon la revendication 10, caractérisé en ce qu'il est prévu, intercalés entre deux plombs (22) fixés rigidement au câble (7), une rangée d'éléments (23), montés librement sur le câble (7) avec jeu axial et qui peuvent coulisser à l'intérieur du tube (8) conjointement avec le câble,

en ce que, au tube (8), est associé un boîtier (21), dans une région dans laquelle les éléments (23) encadrés par les deux plombs (22) se trouvent lorsque l'appareil rapporté (1) se trouve dans sa position de montage, et en ce que la butée de sécurité (30), d'une part, et un cliquet (24) qui forme l'arrêt pour la butée de sécurité (30) et qui peut pivoter à l'intérieur du boîtier (21) à l'encontre de la force d'un ressort (25), d'autre part, sont conformés dans le boîtier (21),

le cliquet à ressort (24) étant engagé entre deux des éléments (23) lorsque l'appareil rapporté (1) se trouve dans sa position de montage tandis que, lorsque l'appareil rapporté (1) relié solidement au câble (7) s'éloigne de sa position de montage, il peut pivoter au moins jusqu'à ce qu'il s'applique contre la butée de sécurité (30).

12. Dispositif de protection anti-vol selon la revendication 11, caractérisé en ce que le contact électrique de protection anti-vol (28) est constitué par un interrupteur qui peut être manoeuvré par le cliquet (24, 27) dans les limites de son mouvement de pivotement jusqu'à la butée de protection (30).

13. Dispositif de protection anti-vol selon la revendication 1 ou 2, caractérisé en ce que le contact électrique de protection anti-vol (2), qui est disposé dans l'alvéole de montage, dans le voisinage de l'appareil rapporté (1) placé en position de montage, peut être actionné directement par l'appareil rapporté (1, 17) lui-même.

14. Dispositif de protection anti-vol selon la revendication 1, 2, 3 ou 13, caractérisé en ce que la butée de sécurité mécanique (15) disposée dans l'alvéole de montage (2) dans le voisinage de l'appareil rapporté (1) placé en position de montage, peut être engagé dans un évidement (17) de l'appareil rapporté (1) qui permet le déplacement limité.

Fig. 1

EP 0 342 378 B1

Fig. 2a

Fig. 2b

Fig. 2c